# EUROPÄISCHE PATENTSCHRIFT

(11) **EP 1 503 386 B1**
(45) Veröffentlichungstag und Bekanntmachung des Hinweises auf die Patenterteilung: **28.12.2011**
(21) Anmeldenummer: 04016846.0
(22) Anmeldetag: 16.07.2004
(51) Int. Cl.: G21K 1/06

(54) **Gekapselter Röntgenspiegel**
Encapsulated X-ray mirror
Miroir encapsulé pour rayons-X

(30) Priorität: 26.07.2003 DE 10334169
(43) Veröffentlichungstag der Anmeldung: 02.02.2005
(73) Patentinhaber: Bruker AXS GmbH, 76187 Karlsruhe (DE)
(72) Erfinder: Lange, Joachim, 76767 Hagenbach (DE); Schipper, Rolf, 76189 Karlsruhe (DE); Brügemann, Lutz, Dr., 76448 Durmersheim (DE); Vigliante, Assunta, 70567 Stuttgart (DE); Gerndt, Ekkehard, Dr., 76227 Karlsruhe (DE)
(74) Vertreter: Kohler Schmid Möbus

(56) Entgegenhaltungen:
- EP-A- 1 126 477
- WO-A-00/42618
- WO-A-99/27542
- DE-A1- 4 027 285
- JP-A- 1 198 021
- US-B1- 6 529 578
- SELLA C ET AL: "Structure and properties of W/C and Ni/C multilayer films" APPLIED SURFACE SCIENCE, ELSEVIER, AMSTERDAM, NL, Bd. 33-34, 1. September 1988 (1988-09-01), Seiten 1208-1215, XP025877449 ISSN: 0169-4332 [gefunden am 1988-09-01]
- BAJT ET AL: "Properties of ultrathin films appropriate for optics capping layers exposed to high energy photon irradiation" SURFACE SCIENCE REPORTS, ELSEVIER SCIENCE, NL, Bd. 63, Nr. 2, 20. Dezember 2007 (2007-12-20), Seiten 73-99, XP022424476 ISSN: 0167-5729
- Xenocs: "Xenocs Products", www.archive.org , 16 June 2003 (2003-06-16), Retrieved from the Internet: URL:http://web.archive.org/web/20030613112 635/www.xenocs.com/products.php [retrieved on 2010-07-05]

## Beschreibung

Die Erfindung betrifft einen Röntgenspiegel, insbesondere Multilayer-Spiegel, zum Reflektieren von Röntgenstrahlung unter streifendem Einfall, mit einem integralen, fest mit dem Röntgenspiegel verbundenen Mittel zum Schutz der Spiegeloberfläche gegen unerwünschte oberflächenverändernde Einflüsse, die die Spiegelwirkung beeinträchtigen
wobei das Mittel zum Schutz der Spiegeloberfläche eine Kapselung der Spiegeloberfläche umfasst, wobei die Kapselung ein für Röntgenstrahlung transparentes Eintritts- und Austrittsfenster aufweist, und wobei die Kapselung luftdicht ist.

Ein gattungsgemäßer Röntgenspiegel ist aus der US 6,529,578 B1 bekannt.

Röntgenstrahlen werden in vielfältiger Weise in der Materialforschung und der Medizintechnik eingesetzt. Dabei wird das besondere Wechselwirkungsverhalten der Röntgenstrahlung mit Materie ausgenutzt, um Informationen über die bestrahlte Materie zu erhalten. Insbesondere bei Beugungsexperimenten ist es vorteilhaft, die Röntgenstrahlung auf einen kleinen Raumbereich einer Materialprobe zu lenken. Dazu werden unter anderem Röntgenspiegel eingesetzt. Bekannte Bauweisen von Röntgenspiegeln umfassen Einkristall-Röntgenspiegel und Multilayer-Spiegel, insbesondere Gradienten-Multilayerspiegel (Goebelspiegel). Mit einem Goebelspiegel kann gleichzeitig eine Reflektion und eine Fokussierung erreicht werden.

Röntgenspiegel (auch Röntgenreflektoren genannt) in Röntgenanordnungen des Standes der Technik verlieren nach kurzer Nutzungsdauer, teilweise schon nach wenigen Monaten, einen erheblichen Teil ihres Reflektionsvermögens. Schließlich werden die Röntgenspiegel völlig unbrauchbar, und ein Austausch des Röntgenspiegels wird erforderlich.

In der DE 101 34 267 A1 wird als Ursache dieser Alterung ein korrosiver Angriff auf die Spiegeloberfläche durch Sauerstoff beschreiben. Durch die Einwirkung der Röntgenstrahlung entsteht aus Luftsauerstoff Ozon, das die Spiegeloberfläche oxidiert. Zur Unterdrückung dieser Oxidation der Spiegeloberfläche wird in dieser Druckschrift vorgeschlagen, die Spiegeloberfläche mit einer korrosionsbeständigen Schicht, insbesondere aus Aluminiumoxid, zu überziehen.

Nachteilig an dieser Überzugsschicht ist vor allem eine Absenkung der Grundreflektivität des Röntgenspiegels. Weiterhin müssen die Materialien der Überzugsschicht und des Röntgenspiegels miteinander verträglich sein. Insbesondere treten, je nach Materialkombination von Überzugsschicht und Spiegelmaterial, mechanische Spannungen auf, die sogar zu einem Abplatzen der Überzugsschicht führen können und so einen Schutz der Spiegeloberfläche unmöglich machen können. Des weiteren hat sich gezeigt, dass mit einer Überzugsschicht eine Alterung des Röntgenspiegels in vielen Fällen nicht in zufriedenstellender Weise verlangsamt werden kann.

Bei Röntgenspiegeln tritt ein zweiter Alterungseffekt auf, der auf einer Verschmutzung an der Spiegeloberfläche beruht. Durch diese Verschmutzung wird die Reflektivität des Röntgenspiegels eingeschränkt. Dieser Alterungseffekt tritt auch bei Röntgenspiegeln mit oben erwähnter Überzugsschicht auf. Als Maßnahme gegen die Verschmutzung ist es bekannt, die Spiegeloberfläche von Zeit zu Zeit zu reinigen, wozu eine zeitaufwändige Demontage des Röntgenspiegels aus der zughörigen Röntgenapparatur erforderlich ist. Die Reinigung ist schwierig und gelingt nicht in allen Fällen.

Die DE 40 27 285 A1 beschreibt ein Röntgenmikroskop mit einer Plasmafokusquelle, deren Röntgenstrahlung in einer evakuierten Säule über einen Spiegelkondensor auf eine Probe und schließlich einen Detektor abgebildet wird. Der Spiegelkondensor hat die Form eines Rotationsellipsoids, wobei an dessen Innenseite die Röntgenstrahlung reflektiert wird. Zum Schutz der reflektierenden Oberfläche sind die beiden stirnseitigen Enden des Spiegelkondensors mit einer Folie abgedeckt.

Die US 6,529,578 B1 beschreibt ein Röntgenkondensor, bei welchem in einem luftdichten Gehäuse ein Röntgenspiegel, ein Analysekristall sowie eine Zonenplatte angeordnet sind. Das luftdichte Gehäuse kann evakuiert werden.

Aufgabe der vorliegenden Erfindung ist es, die Einsatzdauer von Röntgenspiegeln, unabhängig von den verwendeten Materialien des Röntgenspiegels, wesentlich zu verlängern und dabei einen kompakten Bau einzurichten.

Diese Aufgabe wird erfindungsgemäß bei einem Röntgenspiegel der eingangs vorgestellten Art dadurch gelöst, dass die Kapselung auf der Spiegeloberfläche befestigt ist und haubenartig einen Teil der Spiegeloberfläche überspannt.

Durch die luftdichte Kapselung wird die Gesamtmenge (Stoffmenge) an chemischen Substanzen, die mit der Spiegeloberfläche in Wechselwirkung treten können, begrenzt. Erfindungsgemäß bevorzugt ist es daher, mit der Kapselung ein möglichst kleines Volumen nur unmittelbar oberhalb der Spiegeloberfläche zu umschließen. Durch einen "Verbrauch" der die Alterung der Spiegeloberfläche verursachenden Substanzen in der Kapselung wird die Alterung der Spiegeloberfläche reduziert. Besonders bevorzugt ist das Innere der Kapselung frei von die Alterung der Spiegeloberfläche verursachenden Substanzen, so dass es gar nicht erst eines "Verbrauchs" zur Reduktion der Alterungseffekte bedarf.

Durch die Kapselung wird insbesondere ein immer neuer Nachschub von Luftsauerstoff zur Oberfläche des Röntgenspiegels unterbunden. Somit wird ein Abätzen der Spiegeloberfläche durch Ozon oder freie Sauerstoffradikale reduziert.

Der zweite, verschmutzungsbedingte Alterungseffekt der Spiegeloberfläche ist nach Wissen der Erfinder eine Kristallitbildung auf der Spiegeloberfläche, die zu einer Aufrauung der Spiegeloberfläche führt. Die Kristallite streuen das Röntgenlicht in mehr oder weniger zufälliger Weise, d.h. in alle Raumrichtungen, und senken somit die Reflektivität des Röntgenspiegels in die gewünschte Raumrichtung, d.h. in die eigentliche, geometrische Ausfallsrichtung des Röntgenstrahls. Die Kristallitbildung beruht nach den Erkenntnissen der Erfinder auf einer Ablagerung von Verunreinigungen aus der Umgebung des Spiegels. Durch die Kapselung wird ein Zugang von Verunreinigungen aus der Umgebung unterbunden, und damit eine Bildung und/oder ein Wachstum der Kristallite gehemmt.

Erfindungsgemäß begrenzt die Spieelobenfläche des Röntgenspiegels mit den Teilwänden der Kapselung und den Fenstern einen Innenraum der Kapselung; die Spiegeloberfläche bildet einen Teil der Kapselung. Dadurch wird ein besonders kompakter Bau des erfindungsgemäßen Röntgenspiegels erreicht. Insbesondere kann die Kapselung ausschließlich als Aufsatz an der reflektierenden Spiegeloberfläche angeordnet sein.

Die Kapselung kann grundsätzlich unabhängig vom verwendeten Spiegelmaterial verwendet werden. Insbesondere kann die Kapselung über eine Vermittlungsschicht auf dem Röntgenspiegel befestigt werden, wobei die Vermittlungsschicht aufgrund von leichter plastischer Verformbarkeit einen Spannungseintrag in den Röntgenspiegel unterbindet oder auch eine Haftvermittlung bewirkt. Die Vermittlungsschicht kann als Teil der Kapselung aufgefasst werden.

Die Kapselung führt auch zu einem stabileren Betriebsverhalten des Röntgenspiegels. Die Umgebung der Spiegeloberfläche ist durch die Kapselung konstant, insbesondere unabhängig von der Umgebungsverschmutzung (Öl, Ruß, Staub in der Luft), und der Umgebungsfeuchte (Luftfeuchte, auch als Funktion der Temperatur). Dies vereinfacht die Reproduzierbarkeit von Messbedingungen.

Bei einer bevorzugten Ausführungsform des erfindungsgemäßen Röntgenspiegels sind das Eintrittsfenster und/oder das Austrittsfenster aus Beryllium und/oder Polyimid, insbesondere Kapton®, und/oder Mylar gefertigt. Diese Materialien verursachen keine merkliche Absorption von Röntgenstrahlen und verunreinigen das Innere der Kapselung auch bei Einwirkung von Röntgenlicht nicht.

Besonders bevorzugt ist eine Ausführungsform des erfindungsgemäßen Röntgenspiegels, bei der die Fensteroberfläche des Eintrittsfensters und/oder des Austrittsfensters um einen Fensterwinkel von 90° ± 25°, insbesondere 90° ± 5°, gegen die Spiegeloberfläche geneigt ist. Die Alterungsprobleme an den Röntgenspiegeln werden dadurch verstärkt, dass durch die Geometrie des streifenden Einfalls Röntgenstrahlung in einem großen Volumenbereich unmittelbar oberhalb der Spiegeloberfläche wirkt. Durch die obige Fenstergeometrie trifft die Röntgenstrahlung näherungsweise senkrecht auf die Fensterfläche auf, so dass nur ein kleiner Volumenbereich in unmittelbarer Umgebung der Fensterfläche unter Einfluss von Röntgenstrahlung steht. Somit werden Alterungserscheinungen durch Kristallitbildung an den Fenstern verringert. Zusätzlich hilft diese Fenstergeometrie, Reflektionsverluste an den Fenstern zu verringern.

Vorteilhaft ist weiterhin eine Ausführungsform, bei der das Eintrittsfenster und/oder das Austrittsfenster mechanische Stützgitter aufweisen. Die Fenster können dann mit weniger Materialeinsatz bei gleicher mechanischer Stabilität gefertigt werden. Insbesondere verhindern die Stützgitter ein Ausbeulen der Fenster.

Eine vorteilhafte Ausführungsform sieht vor, dass die luftdichte Kapselung evakuiert ist. Unter evakuiert wird ein Gesamtgasdruck von 0,2 bar (2*10⁴ Pa) oder weniger verstanden. Bevorzugt beträgt der Gesamtdruck im Inneren der Kapselung maximal 0,1 Pa. Durch den verringerten Gasdruck werden Materialtransportvorgänge in der Kapselung verlangsamt. Auch wird die Stoffmenge von korrosiven Substanzen in der Kapselung auf einfache Weise vermindert.

Ganz besonders bevorzugt ist eine Ausführungsform, bei der die luftdichte Kapselung eine definierte Atmosphäre enthält, wobei die Atmosphäre vorzugsweise auch unter Einwirkung von Röntgenstrahlung chemisch inert ist. Die Einstellung der definierten Atmosphäre erfolgt typischerweise durch evakuieren und anschließendes Befüllen der Kapselung mit einem bestimmten Gas, oder aber durch Montage und Verschluss der Kapselung in einer bestimmten Gasumgebung, etwa in innerhalb einer Schutzgasbox (Glovebox). Bevorzugt besitzt der erfindungsgemäße Röntgenspiegel mit Kapselung keinerlei verschließbare Öffnungen, sondern die der Röntgenspiegel ist irreversibel mit der geschlossenen Kapselung verbunden. Insbesondere die einatomigen Edelgase eignen sich als Atmosphärengase in der Kapselung. Aus der Atmosphäre entstehen vorzugsweise auch unter Einwirkung der Röntgenstrahlung keinerlei Zerfallsprodukte (wie etwa Atomradikale oder Molekülbruchstücke mit ungepaarten Elektronen oder sonstige stark oxidierenden oder stark reduzierenden Substanzen). Die definierte Atmosphäre verbessert die Reproduzierbarkeit von Röntgenmessungen unter Beteiligung des erfindungsgemäßen Röntgenspiegels. Durch die definierte Atmosphäre wird eine Kontrolle über die möglichen chemischen Vorgänge in der Kapselung gewonnen, die erfindungsgemäß für eine Verminderung der Alterungsprozesse genutzt wird.

Bei einer ganz besonders bevorzugten Weiterbildung dieser Ausführungsform ist die Atmosphäre mit einem Überdruck beaufschlagt, insbesondere mit einem Überdruck zwischen 100 mbar und 500 mbar, vorzugsweise mit einem Überdruck von etwa 300 mbar. Durch den Überdruck wird das Eindringen von Gasmolekülen aus der Umgebung in die Kapselung erschwert (sogenannte Gegenstromdiffusion). Die Atmosphäre in der Kapselung kann dadurch einfacher über längere Zeit konstant gehalten werden, insbesondere sauerstofffrei. Ein Gesamtdruck von etwa 1,3*10⁵ Pa in der Kapselung (entsprechend einem Überdruck von ca. 300 mbar in der Kapselung bei Normalbedingungen in der Umgebung) ist ausreichend, um bei allen Wetterlagen einen Überdruck in der Kapselung gegenüber der Umgebung zu erhalten.

Eine andere vorteilhafte Weiterbildung sieht vor, dass die Atmosphäre für Röntgenstrahlung im Wesentlichen transparent ist. Dadurch wird eine hohe Strahlintensität einer zugehörigen Röntgenapparatur und damit hohe Messgenauigkeit ermöglicht. Ein Röntgen-transparentes Gas hat außerdem weniger Wechselwirkungen mit der Röntgenstrahlung und reduziert dadurch die Reaktionsfreudigkeit der Atmosphäre. Dadurch werden Alterungsprozesse unwahrscheinlicher.

Ganz besonders bevorzugt ist eine Weiterbildung, bei der die Atmosphäre sauerstofffrei ist. Die Atmosphäre wird hierbei als sauerstofffrei angesehen, wenn der Massenanteil von Sauerstoff in der Atmosphäre weniger als 10⁻⁵ (10 ppm) beträgt. Eine weitere Verbesserung kann bei noch niedrigeren Sauerstoff-Massenanteilen, insbesondere weniger als 10⁻⁸ (0,01 ppm), erreicht werden. Dabei ist die Atmosphäre erfindungsgemäß nicht nur frei von Sauerstoffgas (O₂), sondern auch von jedweden anderen sauerstoffhaltigen Gasen, insbesondere CO, CO₂ und H₂O. Solche anderen sauerstoffhaltige Gase können grundsätzlich von Röntgenstrahlung gespalten werden und Ozon oder freie Sauerstoffradikale bilden, die die Spiegeloberfläche beschädigen können. Durch den niedrigen Sauerstoff-Massenanteil wird die Beschädigung (Abätzung) der Spiegeloberfläche verhindert oder zumindest verlangsamt. Unabhängig vom Sauerstoff-Massenanteil in der Atmosphäre ist es erfindungsgemäß bevorzugt, wenn der Partialdruck von Sauerstoffgas (O₂) im Inneren der Kapselung weniger als 1 Pa, insbesondere weniger als 10⁻² Pa beträgt, mit Pa=Pascal=N/m².

Bei einer bevorzugten Weiterbildung besteht die Atmosphäre aus Stickstoffgas und/oder Edelgasen. Bevorzugt sind die Atmosphärengase vor dem Einfüllen in die Kapselung getrocknet worden. Als brauchbares Atmosphärengas hat sich insbesondere Stickstoff der Reinheit 4.8 oder 5.0 erwiesen. Stickstoffgas und Edelgase sind besonders reaktionsträge und tragen daher zu den Alterungsprozessen des Röntgenspiegels nicht bei.

Eine ganz besonders bevorzugte Weiterbildung sieht vor, dass die Kapselungsmaterialien so gewählt sind, dass die Atmosphäre auch unter Einwirkung der Röntgenstrahlung in Anwesenheit der Kapselung chemisch inert ist. Anders ausgedrückt, die Atmosphäre und die Kapselungsmaterialien sind so aufeinander abgestimmt, dass an der Grenzfläche von Kapselungsmaterial und Atmosphäre auch unter Einwirkung von Röntgenstrahlung keine chemischen Reaktionen eintreten, die zu einer Anreicherung der Atmosphäre mit Substanzen führen, die die Alterung der Spiegeloberfläche beschleunigen.

Die Kapselungsmaterialien umfassen sowohl den Strukturwerkstoff der Kapselung als auch Dichtungs- und Klebematerialien, die mit der Atmosphäre im Inneren der Kapselung in Kontakt stehen. Durch diese Weiterbildungsform wird die Alterung der Spiegeloberfläche noch mehr verlangsamt.

Vorteilhaft ist in diesem Zusammenhang auch eine Ausführungsform des erfindungsgemäßen Röntgenspiegels, bei der die Kapselungsmaterialien so gewählt sind, dass diese nicht ausgasen, insbesondere dass diese keine oxidierenden Moleküle abgeben. Um ein Ausgasen im Betrieb zu verhindern, können insbesondere die Kapselungsmaterialien vor dem Zusammenbau des Röntgenspiegels vorgelagert oder ausgeheizt werden. Durch diese Ausführungsform wird ebenfalls die Alterung der Spiegeloberfläche verlangsamt.

Eine andere vorteilhafte Ausführungsform sieht vor, dass die Kapselungsmaterialien Metall, insbesondere kupferfreies Metall, und/oder Glas und/oder Keramik umfassen. Bevorzugt besteht die Kapselung ausschließlich aus Metall, insbesondere kupferfreiem Metall, und/oder Glas und/oder Keramik. Die obigen Materialien sind aufgrund ihrer chemischen und physikalischen Stabilität besonders als Kapselungsmaterialien geeignet. Als Metalle werden insbesondere Leichtmetalle wie Aluminium aufgrund ihrer geringeren Wechselwirkung mit Röntgenstrahlung bevorzugt. Auch das Glas und/oder die Keramik sind bevorzugt kupferfrei, da sich Kupfer als besonders aktiv in der Kristallit-Oberflächenverschmutzung herausgestellt hat.

Besonders bevorzugt ist eine Ausführungsform, bei der die thermischen Ausdehnungskoeffizienten der Kapselungsmaterialien und des Röntgenspiegels aufeinander abgestimmt sind. Vorteilhafter Weise sind insbesondere die thermischen Ausdehnungskoeffizienten in den Richtungen in der Spiegeloberflächenebene gleich, so dass bei schwankenden Betriebstemperaturen keine thermischen Spannungen im Spiegel auftreten. Vorteilhaft ist es weiterhin, die thermischen Ausdehnungskoeffizienten so aufeinander abzustimmen, dass bei einer typischen Betriebstemperatur (um 20°C) die Spiegeloberfläche einen definierten Spannungszustand einnimmt, insbesondere einen spannungsfreien Zustand. Dadurch wird der Röntgenspiegel mit wohldefinierten Reflektionseigenschaften betrieben.

Vorteilhaft ist eine Ausführungsform, bei der der Röntgenspiegel und die Kapselung mechanisch spannungsfrei aufgebaut sind. Dies definiert auf einfache Weise die Reflektionseigenschaften des Röntgenspiegels.

Ganz besonders bevorzugt ist eine Ausführungsform des erfindungsgemäßen Röntgenspiegels, bei der der Röntgenspiegel als Multilayer-Spiegel, insbesondere als Gradienten-Multilayer-Spiegel (=Goebel-Spiegel) ausgeführt ist. Bei einem Multischichtspiegel lässt das Reflektionsvermögen durch Abätzen der Spiegeloberfläche schnell nach, so dass bei diesem Spiegeltyp der Alterungsschutz durch die Kapselung besonders gewünscht ist.

Grundsätzlich ist die Erfindung auch mit anderen Typen von Röntgenspiegeln, etwa Einkristall-Röntgenspiegeln verwendbar. Bei Einkristall-Röntgenspiegeln kann durch Oberflächenätzen die Rauhigkeit der Spiegeloberfläche erhöht werden, und Kristallitablagerungen können ebenfalls die Reflektivität senken. Auch hier verlängert die erfindungsgemäße Kapselung die Spiegel-Einsatzdauer.

Bevorzugt ist weiterhin eine Weiterbildung der obigen Ausführungsform, bei der die Schichtmaterialien des Multilayer-Spiegels Ni/C und/oder Ni/B₄C und/oder W/WSi₂ und/oder V/C und/oder Fe/B₄C umfassen. Der Schrägstrich trennt jeweils die Materialien der einzelnen Schichten. Die Materialkombinationen sind verbreitet und damit kostengünstig.
Die Materialkombination Ni/B₄C wird besonders leicht von Sauerstoffradikalen bzw. Ozon abgeätzt, so dass hier die Vorteile der Erfindung besonders gut zur Geltung kommen.

Eine vorteilhafte Ausführungsform sieht vor, dass der Röntgenspiegel für Röntgenstrahlung unter streifendem Einfall mit einem Einfallswinkel < 5°, insbesondere < 3°, zur Spiegeloberfläche ausgelegt ist. Unter streifendem Einfall ist das von der Röntgenstrahlung durchdrungene Volumen in unmittelbarer Nähe der Spiegeloberfläche (und auch die von Röntgenstrahlung ausgeleuchtete Spiegeloberfläche) besonders groß, so dass bei diesem Röntgenspiegeltyp die Alterungsschäden besonders rasch und intensiv auftreten könnten. Dies wird durch die erfindungsgemäße Kapselung verhindert, und die Vorteile der Erfindung kommen besonders gut zur Geltung.

Erfindungsgemäß können sowohl Röntgenspiegel mit einer (makroskopisch nahezu ebenen) Spiegelfläche als auch Röntgenspiegel mit mehreren Spiegelflächen (insbesondere Doppelspiegelanordnungen, etwa side-byside-Anordnungen) mit einer Kapselung versehen werden.

Ebenfalls in den Rahmen der vorliegenden Erfindung fällt ein Verfahren zur Herstellung eines erfindungsgemäßen gekapselten Röntgenspiegels, das dadurch gekennzeichnet ist, dass die Kapselung unter Reinraumbedingungen mit dem Röntgenspiegel verbunden wird. Dadurch wird ein Eintrag von Staub, Russ, Pollen und anderen Schmutzpartikeln in das Innere der Kapselung verhindert, und die Alterungserscheinungen insbesondere aufgrund von Kristallitbildung aus Verunreinigungen werden vermindert. Eine Reinraumklasse von 100 (100 Partikel > 0,5 µm pro Kubikfuss; 1 Kubikfuss = 2,83*10⁻² m³) ist in der Regel ausreichend. Eine Kapselung mit den Innenabmessungen 2 x 2 x 1 cm³ hätte dann im Mittel nur etwa 0,014 Schmutzpartikel eingeschlossen. Insbesondere werden erfindungsgemäß unter Reinraumbedingungen auch Hautkontakte zum Inneren der Kapselung und insbesondere zur Spiegeloberfläche vermieden.

Bei einer vorteilhaften Verfahrensvariante wird die Kapselung unter Schutzgasatmosphäre mit dem Röntgenspiegel verbunden, insbesondere wobei die Schutzgasatmosphäre mit einer Atmosphäre in der Kapselung identisch ist. Bevorzugt ist das Schutzgas wasserfrei und sauerstoffgasfrei. Die Schutzgasmontage verhindert den Eintrag von alterungsaktiven Substanzen in die Kapselung.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1:: einen schematischen horizontalen Querschnitt durch eine Röntgenanordnung mit einem gekapselten Röntgenspiegel zur allgemeinen Information;
- Fig. 2:: einen schematischen vertikalen Querschnitt durch die Röntgenanordnung von Fig. 1;
- Fig. 3: einen schematischen vertikalen Querschnitt durch eine weitere Röntgenanordnung mit einem erfindungsgemäßen Röntgenspiegel, dessen Spiegeloberfläche gekapselt ist.

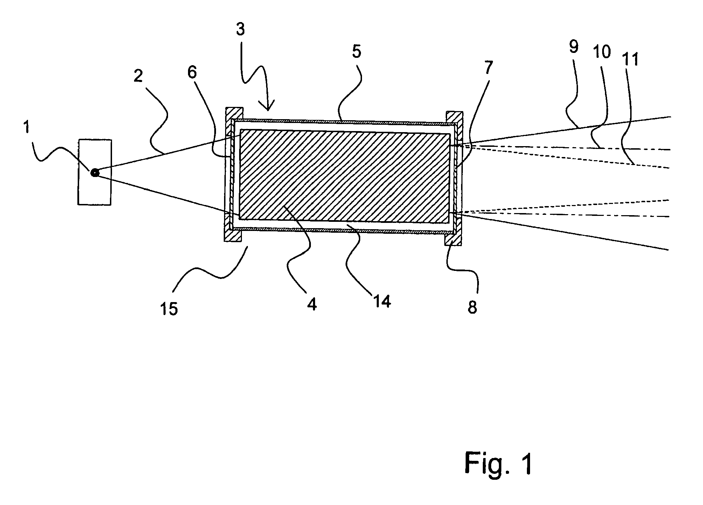

In der **Fig. 1** ist zur allgemeinen Information eine Röntgenanordnung in einer Querschnitt-Aufsicht dargestellt, umfassend eine Röntgenquelle 1, von der ein einfallendes Röntgenstrahlbündel 2 ausgeht, und eine Kapselung 3, die einen Röntgenspiegel 4 enthält. Die Kapselung 3 stellt in der in Fig. 1 dargestellten Ausführungsform ein Gehäuse dar, das den Röntgenspiegel 4 vollständig und allseitig umgibt.

Von der Kapselung 3 sind in Fig. 1 insbesondere Seitenwände 5 dargestellt, die mittels Gehäuseverstärkungen 8 mit Beryllium-Scheiben eines Eintrittsfensters 6 und eines Austrittsfensters 7 verbunden sind. Die gesamte Kapselung 3 ist luftdicht, insbesondere auch wasserdicht, ausgebildet, so dass ein Gas- oder Stoffaustausch zwischen einem Innenraum 14 der Kapselung 3 und der Umgebung 15 der Kapselung 3 ausgeschlossen ist. Die Beryllium-Scheiben des Eintrittsfensters 6 und des Austrittsfensters 7 sind röntgentransparent, so dass das einfallende Strahlbündel 2 ungehindert zum Röntgenspiegel 4 gelangen kann, und ausfallende Röntgenstrahlung die Kapselung ungehindert verlassen kann. Die ausfallende Röntgenstrahlung kann je nach Typ des Röntgenspiegels 3 ein divergentes Strahlenbündel 9, ein paralleles Strahlenbündel 10 oder ein konvergentes Strahlenbündel 11 sein.

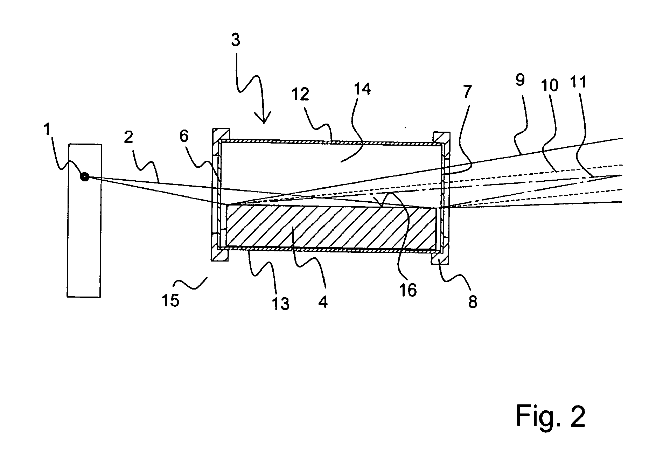

In **Fig. 2** ist die Röntgenanordnung von Fig. 1 in einem vertikalen Querschnitt, also von der Seite, dargestellt. Das von der Röntgenquelle 1 ausgehende, einfallende Strahlenbündel 2 tritt durch das Eintrittsfenster 6 in die Kapselung 3 ein, trifft auf eine Spiegeloberfläche 16 des Röntgenspiegels 4, wird dort reflektiert und verlässt als ein ausfallendes Strahlenbündel 9, 10, 11 die Kapselung 3 durch das Austrittsfenster 7.

Von der Kapselung 3 sind die Berylliumscheiben des Eintritts- und Austrittsfensters 6, 7, Gehäuseverstärkungen 8 sowie eine Deckplatte 12 und eine Bodenplatte 13 dargestellt. Der Röntgenspiegel 4 ruht auf der Bodenplatte 13 und ist auf dieser in nicht dargestellter Weise befestigt, etwa durch eine mechanische Klemmvorrichtung oder durch eine Verklebung.

Die Kapselung 3 beherbergt in ihrem Innenraum 14 ausschließlich einen einzelnen Röntgenspiegel 4. Der Innenraum 14 enthält im Übrigen eine definierte Atmosphäre, bevorzugt hochreines Argon oder Helium bei einem Gasdruck von ca. 1,3*10⁵ Pa. Die Außenabmessungen der Kapselung 3 orientieren sich an der Größe des eingeschlossenen Röntgenspiegels 4, d.h. die Außenabmessungen der Kapselung 3 sind nur wenig größer (bis etwa zu einem Faktor 2) als die Außenabmessungen des Röntgenspiegels 4, wobei oberhalb der Spiegeloberfläche 16 ein Abstand von einigen Millimetern (typischer Weise bis zu ca. 12 mm) bis zur Deckplatte 12 der Kapselung 3 bleibt. Die Außenabmessungen der Kapselung 3 betragen etwa Länge 30 mm, Breite und Höhe jeweils 15 mm; erfindungsgemäß betragen die Außenabmessungen eines gekapselten Röntgenspiegels jeweils maximal 100 mm. Die Kapselung 3 ist mit dem Röntgenspiegel 4 fest verbunden und schützt die Spiegeloberfläche 16 bei Montage des erfindungsgemäßen gekapselten Röntgenspiegels vor einer unbeabsichtigten Berührung und damit Verschmutzung oder Beschädigung. Die Kapselung 3 ist zusammen mit dem eigentlichen Röntgenspiegel 4 leicht tragbar und handhabbar, insbesondere mit einer Hand. Der gekapselte Röntgenspiegel ist ein einzelnes Bauteil für die Röntgenoptik.

Das einfallende Bündel von Röntgenstrahlen trifft sehr flach auf die Spiegeloberfläche 16 auf, nämlich in streifendem Einfall. Der Verlauf der Strahlenbündel 2, (und auch der Strahlenbündel 9, 10, 11) ist fast parallel zur Spiegeloberfläche 16. Der besseren Anschaulichkeit wegen ist der Einfallswinkel (und der Ausfallswinkel) in den Figuren etwas vergrößert dargestellt. Die Ebenen der Berylliumscheiben der Fenster 6, 7 verlaufen senkrecht zur Ebene der Spiegeloberfläche 16. Dadurch ist gewährleistet, dass die Röntgenstrahlung näherungsweise senkrecht auf die Fenster 6, 7 trifft und diese mit nur geringen Reflektionsverlusten durchstrahlen kann.

Obwohl die Spiegeloberfläche 16 in der Figur 2 eben dargestellt ist, kann diese auch profiliert sein, insbesondere ein Paraboloid-Profil aufweisen.

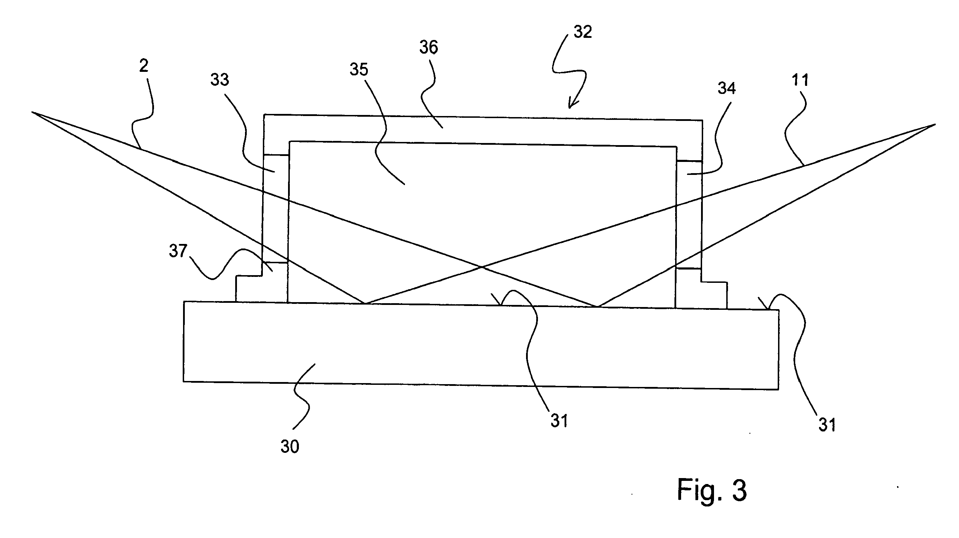

In der **Fig. 3** ist eine Ausführungsform eines erfindungsgemäßen gekapselten Röntgenspiegels dargestellt. Ein Röntgenspiegel 30 besitzt eine reflektierende Spiegeloberfläche 31. Auf dieser Spiegeloberfläche 31 befestigt ist eine Kapselung 32, die haubenartig einen Teil der Spiegeloberfläche 31 überspannt. Nur dieser überspannte Teil der Spiegeloberfläche 31 wird zur Reflektion von Röntgenstrahlung verwendet. Die Kapselung 32 besitzt ein Eintrittsfenster 33 und ein Austrittsfenster 34, jeweils gefertigt aus Beryllium. Ein Innenraum 35 der Kapselung 32 wird begrenzt durch die Teilwände der Kapselung 32, insbesondere eine Deckplatte 36 und Seitenwände 37, die Fenster 33, 34 sowie den Röntgenspiegel 30 selbst. Die Spiegeloberfläche 31 bildet also eine Begrenzung des Innenraums 35 der Kapselung 32, um im Innenraum 35 eine definierte Atmosphäre einschließen zu können.

Oberhalb der Spiegeloberfläche eines Röntgenspiegels wird erfindungsgemäß ein geringes Volumen einer definierten Atmosphäre dauerhaft eingeschlossen, um den Zugang von chemischen Substanzen während der Bestrahlung der Spiegeloberfläche mit Röntgenstrahlung zu begrenzen. Dadurch werden eine Spiegeldegradation verursachende chemische Reaktionen an der Spiegeloberfläche begrenzt, und die Lebensdauer des so gekapselten Röntgenspiegels wird verlängert.

## Patentansprüche

1. Röntgenspiegel (30), insbesondere Multilayer-Spiegel, zum Reflektieren von Röntgenstrahlung (2) unter streifendem Einfall,
mit einem integralen, fest mit dem Röntgenspiegel (30) verbundenen Mittel zum Schutz der Spiegeloberfläche (31) gegen unerwünschte oberflächenverändernde Einflüsse, die die Spiegelwirkung beeinträchtigen,
wobei das Mittel zum Schutz der Spiegeloberfläche (31) eine Kapselung (32) der Spiegeloberfläche (31) umfasst, wobei die Kapselung (32) ein für Röntgenstrahlung transparentes Eintritts- und Austrittsfenster (33, 34) aufweist, und wobei die Kapselung (32) luftdicht ist,
**dadurch gekennzeichnet,**
**dass** die Kapselung (32) auf der Spiegeloberfläche (31) befestigt ist und haubenartig einen Teil der Spiegeloberfläche (31) überspannt.

2. Röntgenspiegel (30) nach Anspruch 1, **dadurch gekennzeichnet, dass** die Fensteroberfläche des Eintrittsfensters (33) und/oder des Austrittsfensters (34) um einen Fensterwinkel von 90° ± 25°, insbesondere 90° ± 5°, gegen die Spiegeloberfläche (31) geneigt ist.

3. Röntgenspiegel (30) nach einem der vorhergehenden Ansprüche, **dadurch gekennzeichnet, dass** die luftdichte Kapselung (32) evakuiert ist, oder dass die luftdichte Kapselung (32) eine definierte Atmosphäre enthält, wobei insbesondere die Kapselungsmaterialien so gewählt sind, dass die Atmosphäre auch unter Einwirkung der Röntgenstrahlung in Anwesenheit der Kapselung (32) chemisch inert, vorzugsweise sauerstofffrei ist.

4. Röntgenspiegel (30) nach einem der vorhergehenden Ansprüche, **dadurch gekennzeichnet, dass** die Kapselungsmaterialien so gewählt sind, dass diese nicht ausgasen, insbesondere dass diese keine oxidierenden Moleküle abgeben.

5. Röntgenspiegel (30) nach einem der vorhergehenden Ansprüche, **dadurch gekennzeichnet, dass** die thermischen Ausdehnungskoeffizienten der Kapselungsmaterialien und des Röntgenspiegels (30) aufeinander abgestimmt sind.

6. Röntgenspiegel (30) nach einem der vorhergehenden Ansprüche, **dadurch gekennzeichnet, dass** der Röntgenspiegel (30) und die Kapselung (32) mechanisch spannungsfrei aufgebaut sind.

7. Röntgenspiegel (30) nach einem der vorhergehenden Ansprüche, **dadurch gekennzeichnet, dass** der Röntgenspiegel (30) für Röntgenstrahlung (2) unter streifendem Einfall mit einem Einfallswinkel < 5°, insbesondere < 3°, zur Spiegeloberfläche (31) ausgelegt ist.

8. Verfahren zur Herstellung eines Röntgenspiegels (30) nach einem der vorhergehenden Ansprüche, **dadurch gekennzeichnet, dass** die Kapselung (32) unter Reinraumbedingungen mit dem Röntgenspiegel (30) verbunden wird.

9. Verfahren nach Anspruch 8, **dadurch gekennzeichnet, dass** die Kapselung (32) unter Schutzgasatmosphäre mit dem Röntgenspiegel (30) verbunden wird, insbesondere wobei die Schutzgasatmosphäre mit einer Atmosphäre in der Kapselung (32) identisch ist.

## Claims

1. X-ray mirror (30), in particular, multi-layered mirror, for reflecting X-ray radiation (2) under grazing incidence, with an integral means, which is fixed to the X-ray mirror (30), for protecting the mirror surface (31) against undesired surface-changing influences that impair the mirror effect,
wherein the means for protecting the mirror surface (31) comprises an encapsulation (32) of the mirror surface (31), wherein the encapsulation (32) has an inlet and an outlet window (33, 34) that are transparent to X-ray radiation, and wherein the encapsulation (32) is air-tight,
**characterized in that**
the encapsulation (32) is mounted to the mirror surface (31) and extends over part of the mirror surface (31) like a hood.

2. X-ray mirror (30) according to claim 1, **characterized in that** the window surface of the inlet window (33) and/or of the outlet window (34) is inclined by a window angle of 90° ± 25°, in particular 90° ± 5°, with respect to the mirror surface (31).

3. X-ray mirror (30) according to any one of the preceding claims, **characterized in that** the air-tight encapsulation (32) is evacuated or the air-tight encapsulation (32) contains a defined atmosphere, wherein, in particular, the encapsulation materials are selected in such a manner that the atmosphere is also chemically inert, advantageously free of oxygen, under the influence of the X-ray radiation in the presence of the encapsulation (32).

4. X-ray mirror (30) according to any one of the preceding claims, **characterized in that** the encapsulation materials are selected such that they do not degas, in particular, **in that** they do not release any oxidizing molecules.

5. X-ray mirror (30) according to any one of the preceding claims, **characterized in that** the thermal extension coefficients of the encapsulation materials and of the X-ray mirror (30) are matched to one another.

6. X-ray mirror (30) according to any one of the preceding claims, **characterized in that** the X-ray mirror (30) and the encapsulation (32) are built free from mechanical stress.

7. X-ray mirror (30) according to any one of the preceding claims, **characterized in that** the X-ray mirror (30) is dimensioned for X-ray radiation (2) under grazing incidence with an angle of incidence of < 5°, in particular < 3°, with respect to the mirror surface (31).

8. Method for producing an X-ray mirror (30) according to any one of the preceding claims, **characterized in that** the encapsulation (32) is connected to the X-ray mirror (30) under clean room conditions.

9. Method according to claim 8, **characterized in that** the encapsulation (32) is connected to the X-ray mirror (30) in a protective gas atmosphere, in particular, wherein the protective gas atmosphere is identical with an atmosphere in the encapsulation (32).

## Revendications

1. Miroir à rayons X (30), en particulier miroir multicouche, conçu pour réfléchir un rayonnement X (2) sous incidence rasante, comportant un moyen intégré, solidaire du miroir à rayons X (30) pour protéger la surface de miroir (31) contre des influences indésirables qui modifient la surface et affectent l'effet réfléchissant,
le moyen pour protéger la surface de miroir (31) comprenant une encapsulation (32) de la surface de miroir (31), l'encapsulation (32) présentant une fenêtre d'entrée et de sortie (33, 34) transparente aux rayons X, et l'encapsulation (32) étant étanche à l'air,
**caractérisé en ce**
**que** l'encapsulation (32) est fixée sur la surface de miroir (31) et recouvre une partie de la surface de miroir (31) à la manière d'une calotte.

2. Miroir à rayons X (30) selon la revendication 1, **caractérisé en ce que** la surface de fenêtre de la fenêtre d'entrée (33) et/ou de la fenêtre de sortie (34) est inclinée d'un angle de fenêtre de 90° ± 25°, en particulier 90° ± 5°, par rapport à la surface de miroir (31).

3. Miroir à rayons X (30) selon une des revendications précédentes, **caractérisé en ce que** l'encapsulation étanche à l'air (32) est mise au vide ou que l'encapsulation étanche à l'air (32) contient une atmosphère définie, les matériaux d'encapsulation étant choisis en particulier de façon que l'atmosphère soit chimiquement inerte, de préférence dépourvue d'oxygène, en présence de l'encapsulation (32) même sous l'influence du rayonnement X.

4. Miroir à rayons X (30) selon une des revendications précédentes, **caractérisé en ce que** les matériaux d'encapsulation sont choisis de façon qu'ils n'émettent pas de gaz, en particulier qu'ils ne cèdent pas de molécules oxydantes.

5. Miroir à rayons X (30) selon une des revendications précédentes, **caractérisé en ce que** les coefficients de dilatation thermique des matériaux d'encapsulation et du miroir à rayons X (30) sont adaptés les uns aux autres.

6. Miroir à rayons X (30) selon une des revendications précédentes, **caractérisé en ce que** le miroir à rayons X (30) et l'encapsulation (32) sont construits sans contraintes mécaniques.

7. Miroir à rayons X (30) selon une des revendications précédentes, **caractérisé en ce que** le miroir à rayons X (30) est conçu pour un rayonnement X (2) sous incidence rasante avec un angle d'incidence < 5°, en particulier < 3°, par rapport à la surface de miroir (31).

8. Procédé de fabrication d'un miroir à rayons X (30) selon une des revendications précédentes, **caractérisé en ce que** l'encapsulation (32) est assemblée avec le miroir à rayons X (30) dans des conditions de salle blanche.

9. Procédé selon la revendication 8, **caractérisé en ce que** l'encapsulation (32) est assemblée avec le miroir à rayons X (30) sous atmosphère protectrice, l'atmosphère protectrice étant en particulier identique à une atmosphère présente dans l'encapsulation (32).
